Europäisches Patentamt

European Patent Office

Office européen des brevets

(19)

(11) Veröffentlichungsnummer: **0 103 239**
**A2**

(12) **EUROPÄISCHE PATENTANMELDUNG**

(21) Anmeldenummer: **83108613.7**

(51) Int. Cl.³: **G 03 B 15/00**

(22) Anmeldetag: **01.09.83**

(30) Priorität: **09.09.82 CH 5354/82**
**28.09.82 DE 8227142 U**

(71) Anmelder: **Pan Impex Consult AG, Dufourstrasse 97, CH-8008 Zürich (CH)**

(43) Veröffentlichungstag der Anmeldung: **21.03.84**
**Patentblatt 84/12**

(72) Erfinder: **Koltai, Stephan, Dufourstrasse 97, CH-8008 Zürich (CH)**

(74) Vertreter: **Patentanwälte Schaad, Balass, Sandmeier, Alder, Dufourstrasse 101 Postfach, CH-8034 Zürich (CH)**

(84) Benannte Vertragsstaaten: **AT FR GB IT SE**

(54) Verfahren zum Herstellen von drucksachenähnlichen Erzeugnissen, insbesondere Visiten-, Werbe- und Geschäftskarte.

(57) Die Herstellung von Visiten-, Geschäfts-, Werbekarten oder dergleichen, die als Gesamtbild einen Bildteil (1) und einen Textteil (2) enthalten, wird vereinfacht und verbilligt, indem sowohl vom Bildteil (1) als auch vom Textteil (2) separat eine kopierfähige Vorlage, z.B. ein Negativ, erstellt wird. Die Vorlagen werden in die richtige gegenseitige Anordnung gebracht, welche dem gewünschten Gesamtbild entspricht. Die so erhaltene Gesamtvorlage wird auf eine lichtempfindliche Schicht belichtet. Durch photochemisches Entwickeln der belichteten lichtempfindlichen Schicht wird dann das Endprodukt erhalten. Letzteres ist somit eine auf photographischem Weg erhaltene Kopie. Da kein Druckvorgang herkömmlicher Art stattfindet, lässt sich dieses Endprodukt billiger, schneller und farbechter als die üblichen Druckerzeugnisse herstellen.

MIKE G. MUSTER

BAHNHOFSTRASSE 2
CH - 7777 DORFSTADT

TEL.016 / 445 66 07

Verfahren zum Herstellen von drucksachenähnlichen Erzeugnissen, insbesondere Visiten-, Werbe- und Geschäftskarte

Die vorliegende Erfindung betrifft ein Verfahren zur Herstellung von drucksachenähnlichen Erzeugnissen gemäss Oberbegriff des Anspruches 1 sowie ein derartiges Erzeugnis gemäss Oberbegriff des Anspruches 12. Unter einem solchen Erzeugnis sollen im nachfolgenden Visiten-, Geschäfts- und Werbekarten, Briefbögen, Prospekte und dergleichen verstanden werden.

Die Herstellung von solchen Erzeugnissen erfolgt in der Regel mittels eines Druckverfahrens (Hoch-, Tief- oder Offsetdruck), wobei die Wiedergabe von Illustrationen, vor allem farbigen Bildern, die Herstellung kompliziert und verteuert, ist es doch für den Mehrfarbendruck bekanntlich erforderlich, vom mehrfarbigen Original auf photographischem Wege Farbauszüge herzustellen, die als Kopiervorlagen für die Anfertigung der Druckformen dienen.

Der vorliegenden Erfindung liegt nun die Aufgabe zugrunde, ein Verfahren der eingangs genannten Art zu schaffen, mit welchem drucksachenähnliche Erzeugnisse auf wesentlich einfachere Weise angefertigt werden können und mit dem die Herstellungskosten, insbesondere bei kleinen Auflagen, erheblich gesenkt werden können.

Diese Aufgabe wird erfindungsgemäss durch die Merkmale des kennzeichnenden Teils des Anspruches 1 gelöst.

Das erfindungsgemässe Erzeugnis zeichnet sich durch die Merkmale des Anspruches 12 aus.

Da das Gesamtbild vollständig auf phototechnischem und photochemischem Weg hergestellt wird und nicht mehr auf drucktechnischem Wege, lassen sich die Herstellungskosten gegenüber gedruckten Erzeugnissen vor allem bei kleinen Auflagen erheblich senken. Zudem ist eine naturgetreue Farbwiedergabe möglich. Eine Farbverschiebung, wie das beim Mehrfarbendruck auftreten kann, wird vermieden.

Im folgenden wird anhand der Zeichnung der Erfindungsgegenstand näher beschrieben. Es zeigt rein schematisch:

Fig. 1 eine erfindungsgemässe Visitenkarte, und

Fig. 2 eine zur Erläuterung eines möglichen Herstellungsverfahrens für die Visitenkarte gemäss Fig. 1 dienende Darstellung.

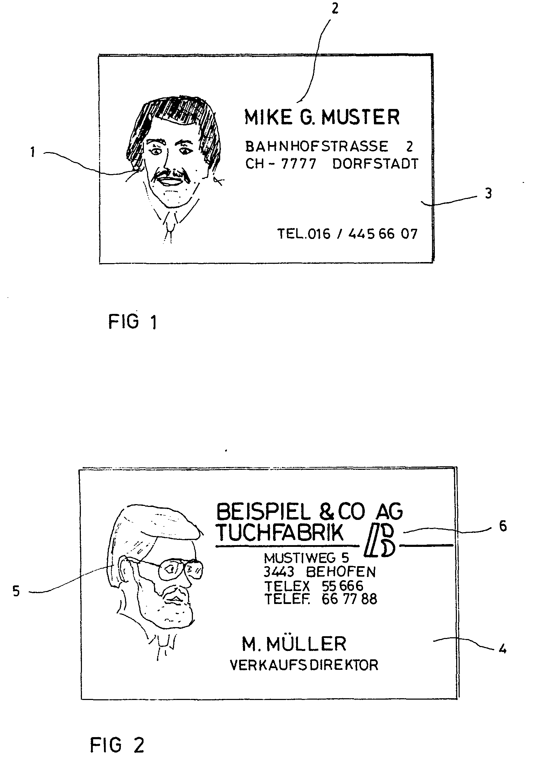

In Fig. 1 ist eine Visitenkarte dargestellt, die ein durch einen Bildteil 1 und einen Textteil 2 gebildetes, farbiges Gesamtbild aufweist und aus einem photochemisch entwickelten, farbempfindlichen photographischen Papier 3 besteht. Bei der Herstellung der Visitenkarte ist die photographische Schicht des photographischen Papieres gleichzeitig mit dem Bildteil 1 und dem Textteil 2 belichtet und anschliessend entwickelt worden. Die Herstellung der Visitenkarte erfolgte somit auf phototechnischem Weg ohne den Einsatz von Druckmaschinen.

Im folgenden werden mögliche Verfahren zur Herstellung der Visitenkarte erläutert.

0103239

Von dem im Bildteil 1 wiederzugebenden Gegenstand, z.B.
einer Person, wird auf photographischem Weg eine Farbaufnahme hergestellt, die als Negativ (oder Positiv) zur
Verfügung steht. Separat, d.h. ohne den Bildteil 1, wird
der Textteil in der gewünschten Anordnung photographisch
festgehalten. Nach dem Entwickeln werden die entsprechenden Filmnegative (bzw. Positive) so übereinandergelegt,
dass sie zusammen das gewüschte Gesamtbild der Visitenkarte ergeben. Die derart zusammengesetzten Negative werden in einer Maske festgehalten und als Kopiervorlage benützt, von der auf in der Photographie üblichem Wege
Kopien hergestellt werden. Diese Kopien bilden nun die
fertigen Visitenkarten, die aus photographischem Papier
bestehen. Die Herstellung erfolgt somit auf phototechnischem und photochemischem Weg ohne die Benützung von
herkömmlichen Druckmaschinen. In der gleichen Weise kann
auch die Rückseite der Visitenkarte mit einem Text versehen werden.

Eine weitere Herstellungsmöglichkeit wird nun unter Bezugnahme auf die Fig. 2 erläutert.

Der Textteil 6 wird auf dem Bildschirm 4 einer Filmsetzmaschine zur Fotosatzherstellung erzeugt. Vorgängig wird
von einem Negativ (oder Positiv) auf dem gleichen Bildschirm der Filmsetzmaschine der Bildteil 5 projiziert. Der
Textteil 6 wird dann mit der Filmsetzmaschine eigenen
Mitteln in der gewünschten Anordnung um oder neben das projizierte Bild 5 eingepasst, wie das aus der Fig. 2 ersichtlich ist. Anschliessend wird der eingepasste Textteil 6 in der richtigen Anordnung ebenfalls mit Mitteln der Filmsetzmaschine photographisch festgehalten. Das Negativ (oder Positiv) des Bildteils 5 und dasjenige des Textteiles 6 werden nachher aufeinander gelegt und wie oben erläutert kopiert. Ein Aufeinanderausrichten der beiden Negative (bzw. Positive) erübrigt sich.

Statt die zusammengesetzten bzw. übereinandergelegten Negative und/oder Positive direkt zu kopieren (Kontaktkopieren), kann bei der Projektion auf lichtempfindliches Papier eine Vergrösserung oder Verkleinerung erfolgen. Auch in diesem Fall werden keine Druckmaschinen herkömmlicher Art gebraucht.

Bei einer weitern Variante des Herstellungsverfahrens wird zunächst eine Aufnahme des Bildteils gemacht, welche auf einem Videoband gespeichert wird. Der Textteil wird auf einem Magnetband gespeichert, wobei die Speicherung von Bildteil und Textteil vorzugsweise in ein und derselben Kasette erfolgt.

Anschliessend wird sowohl der auf Videoband gespeicherte Bildteil wie auch der auf Magnetband gespeicherte Textteil auf einen Schirm, z.B. auf eine Flüssigkristallplatte, projiziert. Mit an sich bekannten Mitteln werden Bild-und Textteil in die richtige gegenseitige Lage gebracht, um so das gewünschte Gesamtbild zu erstellen, welches dann in einen Speicher eingespeichert wird. Von diesem gespeicherten Gesamtbild werden dann die Endprodukte in Form von Kopien hergestellt. Zu diesem Zweck
wird das gespeicherte Gesamtbild auf einem Schirm, z.B.
auf einer Kathodenstrahlröhre oder einer Flüssigkristallplatte, wieder erzeugt und z.B. auf optischem oder elektronischem Weg auf photographisches Papier belichtet, das
anschliessend auf photochemischem Weg entwickelt wird.
Die Herstellung der Kopien kann im Kontaktkopierverfahren erfolgen. Es ist selbstverständlich auch möglich,
von der Kopiervorlage Vergrösserungen oder Verkleinerungen
herzustellen.

Im weitern ist es möglich, den Bildteil auf einem Bildschirm sichtbar zu machen, auf dem mittels eines direkt
angeschlossenen Film-oder Photosetzgerätes auch der Textteil erzeugt wird. Die Bild-und Textinformation des Gesamtbildes wird nun direkt einer Einrichtung zum Erzeugen
von Kopien (Printer) zugeführt oder auf einem Datenträger,
z.B. einem Videoband, zwischengespeichert, von dem die
Information dann dieser Einrichtung zum Herstellen der
Kopien zugeführt wird.

Das auf dem Bildschirm erzeugte Gesamtbild kann mittels
eines Bildaufnahmegerätes, z.B. einer Videokamera, aufgenommen werden. Die auf diese Weise erhaltene Bildinformation wird dann direkt oder nach vorheriger Zwischenspeicherung der Einrichtung zur Herstellung von Kopien
zugeführt.

Der ganze Herstellungsvorgang kann vollautomatisiert erfolgen, z.B. durch eine computergesteuerte Einrichtung.

Die Herstellung von qualitativ hervorragenden Erzeugnissen ist sehr einfach und vor allem bei kleinen Auflagen
gegenüber auf drucktechnischem Wege hergestellten Produkten kostengünstiger. Zudem erscheint das Gesamtbild, wel-

0103239

ches - wie erläutert - eine auf phototechnischem Weg erzeugte Kopie ist, in leuchtenden, naturgetreuen Farben, was auf dem Weg eines Mehrfarbendruckes nur mit erheblichem Aufwand zu erreichen ist.

Patentansprüche

1. Verfahren zur Herstellung von drucksachenähnlichen Erzeugnissen, welche ein aus mindestens einem Bildteil und wenigstens einem Textteil bestehendes Gesamtbild enthalten, dadurch gekennzeichnet, dass sowohl vom Bildteil (1) als auch vom Textteil (2) eine Vorlage hergestellt und aus den beiden Vorlagen eine kopierfähige Gesamtvorlage mit der gewünschten Anordnung von Bild- und Textteil (1,2) erstellt wird, worauf diese Gesamtvorlage auf eine lichtempfindliche Schicht belichtet wird, die auf phototechnischem bzw. photochemischem Wege zum Endprodukt weiterverarbeitet wird.

2. Verfahren nach Anspruch 1, dadurch gekennzeichnet, dass die Gesamtvorlage auf eine farbempfindliche Schicht belichtet wird.

3. Verfahren nach Anspruch 1 oder 2, dadurch gekennzeichnet, dass sowohl vom Bildteil (1) wie auch vom Textteil (2) je eine kopierfähige Vorlage auf photographischem Wege hergestellt und von den gegenseitig aufeinander ausgerichteten Vorlagen Kopien hergestellt werden.

4. Verfahren nach einem der Ansprüche 1 - 3, dadurch gekennzeichnet, dass die vom Bildteil (1) und vom Textteil (2) separat aufgenommenen und entwickelten photographischen Aufnahmen übereinandergelegt, dem zu erzielenden Gesamtbild entsprechend positioniert und kopiert werden.

5. Verfahren nach Anspruch 1 oder 2, dadurch gekennzeichnet, dass der Bildteil (1) auf dem Bildschirm einer Photosatzmaschine projiziert und der Textteil (2) um das proji-

A 4428,DE                    4.10.1982
                             Al:fk

zierte Bild herum als photomechanischer Satz auf dem gleichen Bildschirm in der gewünschten Anordnung gesetzt und als photographische Aufnahme festgehalten wird, worauf diese Textaufnahme mit der Aufnahme des Bildteils zur Gesamtvorlage vereinigt wird und von dieser Kopien hergestellt werden.

6.    Verfahren nach Anspruch 1 oder 2, dadurch gekennzeichnet, dass vom Bildteil (1) und vom Textteil (2) Videoaufnahmen gemacht, die Videobilder projiziert und gegenseitig positioniert werden, um so das gewünschte Gesamtbild zu erhalten, welches gespeichert wird.

7.    Verfahren nach Anspruch 6, dadurch gekennzeichnet, dass vom gespeicherten Gesamtbild eine kopierfähige photographische Aufnahme hergestellt wird.

8.    Verfahren nach Anspruch 6, dadurch gekennzeichnet, dass vom gespeicherten Gesamtbild eine Kopiervorlage erzeugt wird, die auf eine lichtempfindliche Schicht belichtet wird, die photochemisch entwickelt wird.

9.    Verfahren nach Anspruch 8, dadurch gekennzeichnet, dass die dem gespeicherten Gesamtbild entsprechende Kopiervorlage in einem dem Speicher angeschlossenen Printer erzeugt wird.

10.    Verfahren nach Anspruch 1 oder 2, dadurch gekennzeichnet, dass auf einem Bildschirm ein aus Bild-und Textteil (1, 2) bestehendes Gesamtbild erzeugt wird und dass aufgrund der Bildinformation des letzteren direkt oder nach vorheriger Zwischenspeicherung dieser Bildinformation Endprodukte erzeugt werden.

11.    Verfahren nach Anspruch 10, dadurch gekennzeichnet,

0103239

dass die Endprodukte aufgrund einer Videoaufnahme des Gesamtbildes erzeugt werden.

12. Drucksachenähnliches Erzeugnis, insbesondere Visiten-, Werbe- und Geschäftskarte, mit einem aus wenigstens einem Bildteil und wenigstens einem Textteil bestehenden Gesamtbild, dadurch gekennzeichnet, dass das Gesamtbild (1, 2) eine auf phototechnischem Weg hergestellte Kopie ist.

13. Erzeugnis nach Anspruch 12, dadurch gekennzeichnet, dass es eine gleichzeitig mit dem Bildteil (1) und dem Textteil (2) belichtete und entwickelte photographische Schicht aufweist.

14. Erzeugnis nach Anspruch 13, dadurch gekennzeichnet, dass die photographische Schicht auf einem Träger angeordnet ist.

15. Erzeugnis nach einem der Ansprüche 12 - 14, dadurch gekennzeichnet, dass es mindestens zum Teil aus einem photographischen Papier besteht, das auf der Seite der photographischen Schicht den Bildteil (1) und den Textteil (2) trägt.

16. Erzeugnis nach einem der Ansprüche 12 - 15, dadurch gekennzeichnet, dass die den Bildteil (1) und den Textteil (2) tragende Seite farbig ist.

17. Erzeugnis nach einem der Ansprüche 13 - 16, dadurch gekennzeichnet, dass die photographische Schicht farbempfindlich ist.

18. Erzeugnis nach einem der Ansprüche 12 - 17, dadurch gekennzeichnet, dass es karten-, blatt- oder bogenförmig ausgebildet ist.

1/1

FIG 1

FIG 2